(19) Europäisches Patentamt
European Patent Office
Office européen des brevets

(11) **EP 4 400 929 A1**

(12) **DEMANDE DE BREVET EUROPEEN**

(43) Date de publication:
**17.07.2024 Bulletin 2024/29**

(21) Numéro de dépôt: **23305050.9**

(22) Date de dépôt: **13.01.2023**

(51) Classification Internationale des Brevets (IPC):
***G05B 23/02*** *(2006.01)*

(52) Classification Coopérative des Brevets (CPC):
**G05B 23/0254; G05B 23/0281;** G05B 23/0286

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeurs:
• **ATOS FRANCE**
  **95870 Bezons (FR)**
• **Centre national de la recherche scientifique**
  **75016 Paris (FR)**
• **Institut National des Sciences Appliquees de Toulouse (INSA Toulouse)**
  **31077 Toulouse Cedex 4 (FR)**

(72) Inventeurs:
• **GOUPIL, Louis**
  **31300 Toulouse (FR)**
• **TRAVE-MASSUYES, Louise**
  **31460 Caraman (FR)**
• **CHANTHERY, Elodie**
  **31400 Toulouse (FR)**

(74) Mandataire: **Novagraaf Technologies**
  **Bâtiment O2**
  **2, rue Sarah Bernhardt**
  **CS90017**
  **92665 Asnières-sur-Seine Cedex (FR)**

(54) **DIAGNOSTIC D'UN SYSTÈME PHYSIQUE PAR PREDICTION D'INDICATEURS DE FAUTE PAR APPRENTISSAGE MACHINE**

(57) L'invention concerne un système de diagnostic (20) pour un système physique (10) comportant des moyens pour l'acquisition de mesures ($m_1$, $m_2$, ..., ms) fournies par des capteurs ($1_1$, $1_2$, ..., $1_S$), pour la fourniture desdites mesures en entrée d'un ensemble (22) de modèles prédictifs ($M_1$, $M_2$, $M_3$, ..., $M_N$) générant chacun un indicateur de faute ($r_1$, $r_2$, $r_3$, ..., $r_N$), puis pour la détermination d'un diagnostic dudit système physique à partir desdits indicateurs de faute et d'une matrice de signatures (24) associant diagnostics et indicateurs de faute ($r_1$, $r_2$, $r_3$, ..., $r_N$).

**Fig. 2**

EP 4 400 929 A1

## Description

### DOMAINE DE L'INVENTION

L'invention concerne le diagnostic de systèmes physiques par un système de supervision.

### CONTEXTE DE L'INVENTION

La complexité croissante de certains systèmes physiques et l'accroissement des exigences de rentabilité et de fiabilité entraînent la nécessité de leur supervision afin de détecter tout dysfonctionnement, au plus tôt et de la manière la plus sûre possible.

Les systèmes physiques peuvent être de différents types et de complexités variées : machine-outil, centrale énergétique notamment centrale nucléaire, imprimantes 3D, etc.

Un système de supervision a pour objectif d'assurer le bon fonctionnement du système physique et de lui permettre d'effectuer des actions réactives et proactives. La conception d'un système de supervision nécessite d'une part l'implantation d'un système de diagnostic pour réaliser la détection et l'isolation de défauts ou fautes («*fault détection and isolation* », FDI en anglais) et d'autre part la mise en oeuvre de la commande de tolérance aux fautes («*fault tolérant control* », FTC, en anglais).

Pour pouvoir fonctionner correctement, ce système de supervision doit se baser sur une connaissance précise et sûre de l'état du système physique supervisé. Il peut pour ce faire se baser sur des capteurs recueillant des mesures en différents points du système physique.

La qualité des mesures est donc un élément crucial pour pouvoir garantir en premier lieu le bon fonctionnement du système physique puis la tolérance aux pannes du système supervisé.

Or le système de supervision lui-même, et notamment les mécanismes de recueil de mesures (capteurs, ...) peuvent également être défaillant.

Pour se prémunir de ce type de faute, ou défaut, des mécanismes de redondance sont classiquement mis en place.

La redondance matérielle consiste à disposer de plusieurs capteurs pour mesurer une même quantité. Ainsi, une défaillance d'un capteur engendrera une différence, ou résidu, entre les valeurs mesurées et permettra de détecter une panne de capteur, et donc de discriminer entre les fautes du système physique supervisé et les pannes du système de supervision.

Un tel mécanisme ne permet toutefois pas de localiser quel est le capteur en panne, et engendre évidemment un surcoût important du fait du grand nombre de capteurs à déployer et maintenir.

La redondance analytique repose sur les relations entre les différentes mesures qui peuvent être effectuées sur un système physique donné. En disposant de capteurs mesurant des quantités distinctes, si l'on connaît un modèle permettant de lier ces quantités (par exemple, une pression et une température dans une tuyère), on peut, de façon analytique, déterminer des cohérences et incohérences.

Ce mécanisme nécessite de connaître précisément les équations mathématiques régissant le fonctionnement du système physique supervisé afin de pouvoir générer les relations de redondance analytique (ou « *Analytical Redundancy Relations* », ARR, en anglais) qui lient les quantités mesurables du système physique.

Or, ces équations mathématiques peuvent ne pas être connues. Cela est notamment le cas pour les systèmes complexes.

### RESUME DE L'INVENTION

Le but de la présente invention est de fournir un procédé et un système de diagnostic d'un système physique palliant au moins partiellement les inconvénients précités.

Plus particulièrement, l'invention vise à fournir un procédé d'établissement d'un diagnostic d'un système physique comportant l'acquisition de mesures fournies par des capteurs, la fourniture desdites mesures en entrée d'un ensemble de modèles prédictifs générant chacun un indicateur de faute, puis la détermination d'un diagnostic dudit système physique à partir desdits indicateurs de faute et d'une matrice de signatures associant diagnostics et indicateurs de faute.

Suivant des modes de réalisation préférés, l'invention comprend une ou plusieurs des caractéristiques suivantes qui peuvent être utilisées séparément ou en combinaison partielle entre elles ou en combinaison totale entre elles :

- ladite matrice de signatures est déterminée par la détermination d'un graphe, la détermination de sous-graphes minimalement surdéterminés à partir dudit graphe, puis la détermination de ladite matrice de signatures à partir de l'ensemble desdits sous-graphes minimalement surdéterminés ;
- la détermination des sous-graphes minimalement surdéterminés est obtenue par une décomposition de Dulmage-Mendelsohn ;
- lesdits modèles prédictifs sont entraînés par la constitution d'un ensemble d'apprentissage associant des ensembles de mesures et des étiquettes représentant un diagnostic souhaité, et par l'entraînement supervisé itératif de chacun desdits modèles prédictifs en fonction d'un indicateur de faute souhaité déterminé à partir de ladite étiquette et de ladite matrice de signatures ;
- plusieurs modèles prédictifs sont entraînés pour un même indicateur de faute, et le procédé comporte une sélection d'un modèle prédictif parmi lesdits plusieurs modèles prédictifs en fonction de critères définis.

Un autre aspect de l'invention est relatif à un système de diagnostic pour un système physique, comportant des moyens pour l'acquisition de mesures fournies par des capteurs, pour la fourniture desdites mesures en entrée d'un ensemble de modèles prédictifs générant chacun un indicateur de faute, puis pour la détermination d'un diagnostic dudit système physique à partir desdits indicateurs de faute et d'une matrice de signatures associant diagnostics et indicateurs de faute.

Un autre aspect de l'invention est relatif à un système de supervision comportant un système de diagnostic tel que précédemment défini.

Un autre aspect de l'invention est relatif à un système comportant un système de supervision tel que précédemment défini et ledit système physique.

Un autre aspect de l'invention est relatif à un programme d'ordinateur comprenant des instructions qui, lorsque le programme est exécuté par un ordinateur, conduisent celui-ci à mettre en oeuvre la méthode telle que précédemment définie.

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES DESSINS

La figure 1 représente schématiquement un système de supervision et un système physique supervisé.

La figure 2 représente schématiquement un exemple de système de diagnostic selon un mode de réalisation de l'invention.

La figure 3 représente schématiquement un exemple de mécanisme pour la détermination d'une matrice de signatures selon un mode de réalisation de l'invention.

La figure 4 représente schématiquement un exemple de mécanisme d'apprentissage des modèles prédictifs selon un mode de réalisation de l'invention.

DESCRIPTION DETAILLEE DE L'INVENTION

Un système de supervision peut être associé à un système physique afin d'une part de suivre l'évolution de son état, et éventuellement d'agir sur certains paramètres soit pour en modifier proactivement le comportement, soit pour réagir à son état.

Un système physique peut être de différents types.

D'une façon générale, l'invention peut être particulièrement intéressant dans le cas de systèmes dont la complexité est trop importante pour qu'on puisse connaître les équations physiques précises qui régissent son comportement et pour lesquels on fait donc généralement appel à l'analyse structurelle et à la redondance analytique.

À titre d'exemples, on peut citer une imprimante 3D par dépôt de plastique, par fusion de billes de métal ou par dépôt de couches de métal, dans le domaine de l'impression 3D, un vérin hydraulique, un réservoir d'eau, une machine d'usinage, un bras mécanique, un drone, un panneau solaire, une éolienne ou même des systèmes beaucoup plus complexes comme une voiture, un avion ou n'importe lequel de leurs sous-systèmes (ex : circuit hydraulique d'un avion).

L'état de ce système physique peut être connu, ou en tout cas estimable (pour sa partie observable), par des mécanismes de recueil de mesures, appelés capteurs. Ces capteurs visent à mesurer des quantités mesurables du système physique : par exemple, une température, une pression, un taux d'un composé chimique particulier, etc.

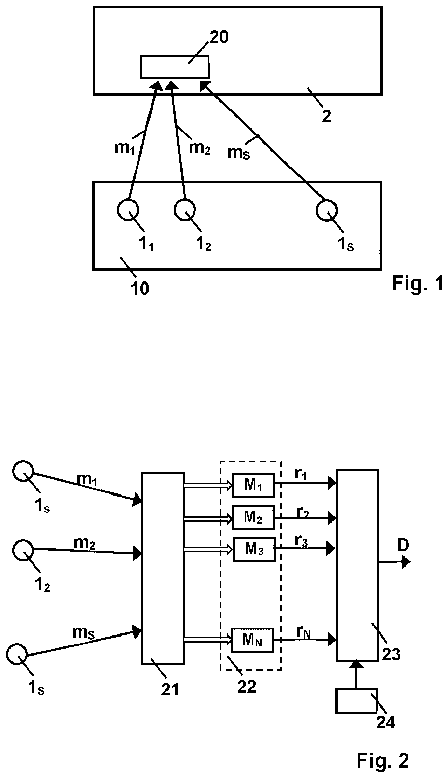

Dans l'exemple de la FIGURE 1, le système physique 10 est observé par des capteurs $1_1$, $1_2$...$1_S$, où S est le nombre de capteurs. Ces capteurs transmettent des mesures (ou des flots de valeurs de mesures), respectivement $m_1$, $m_2$, ..., $m_S$, vers un système de supervision 2.

Dans la suite, par clarté et concision, le terme « mesure » peut représenter la valeur de la mesure. Il est entendu que chaque capteur est susceptible de transmettre des flots de mesures au fil du temps.

Plus précisément, selon un mode de réalisation, ces mesures sont transmises à un système de diagnostic 20, appartenant à ce système de supervision 2, ayant pour but de détecter tout dysfonctionnement du système physique 10 supervisé.

On appelle dysfonctionnement un écart par rapport à un fonctionnement nominal. Typiquement, un mécanisme de seuil est mis en place pour ne détecter un dysfonctionnement que lorsque l'écart est supérieur à ce seuil.

Différentes mises en oeuvre existent pour la transmission des mesures entre les capteurs $1_1$, $1_2$...$1_S$ et le système de diagnostic 20. Selon le type de système physique 10 et selon les choix de mode de réalisation, la transmission peut être effectuée par des connexions filaires (Ethernet, etc.) ou sans-fil (WiFi, Bluetooth, etc.).

Le but du système de diagnostic 20 est d'établir un diagnostic, D, du système physique 10 supervisé. Ce diagnostic D dépeint l'état du système physique 10 supervisé à un instant donné par rapport à un fonctionnement nominal, et vise à être autant que possible indépendant des fautes (ou dysfonctionnements) des capteurs via un mécanisme de redondance analytique.

Un diagnostic D peut indiquer l'absence de dysfonctionnement ou identifier un dysfonctionnement particulier.

Classiquement, on appelle faute, ou défaut, ou encore dysfonctionnement, un écart entre une variable, ou quantité, observée et une valeur attendue pour cette même quantité. Une faute d'un capteur se caractérise donc par l'écart, au-dessus d'un certain seuil de tolérance, entre la valeur réelle de la quantité mesurée et sa valeur mesurée.

La FIGURE 2 illustre plus précisément le système de diagnostic 20.

Selon l'invention, des moyens 21 sont prévus pour transmettre les mesures $m_1$, $m_2$, ..., $m_S$ recueillies par les capteurs $1_1$, $1_2$, ..., $1_S$, en entrée d'un ensemble 22 de modèles prédictifs.

Sur la figure, l'ensemble 22 possède N modèles prédictifs, $M_1$, $M_2$, $M_3$, ..., $M_N$, préalablement entraînés. Chaque modèle prédictif $M_1$, $M_2$, $M_3$, ..., $M_N$ est associé à un indicateur de faute, ou résidu, $r_1$, $r_2$, $r_3$, ..., $r_N$, respectivement.

Un indicateur de faute, ou résidu, exprime l'incohérence entre les informations disponibles et les informations théoriques fournies par un modèle du système physique.

En particulier ici, du fait de la redondance analytique, les valeurs de mesures peuvent être confrontées à la connaissance du système physique (modélisée ici par un ensemble 22 de modèles prédictifs) et les autres mesures recueillies par les autres capteurs.

À partir d'un ensemble de mesures, qui peut être différent pour chaque couple modèle prédictif/résidu, chaque modèle prédictif peut générer un résidu, ou indicateur de faute.

Chaque modèle prédictif peut correspondre à une relation de redondance analytique, RRA.

La notion de relation de redondance analytique a été initiée par J.E. Potter et M.C. Suman. « Thresholdless redundancy management with array of skewed instruments. Electronic Flight Control Systems », 224:15-25, 1977. Ces relations de redondance analytique ont depuis fait l'objet de nombreux travaux et, se basant sur une modélisation mathématique des systèmes et processus physiques supervisés, sont complexes à mettre en oeuvre.

Selon l'invention, des modèles prédictifs sont utilisés pour la génération des indicateurs de fautes à la place de ces modélisations mathématiques.

Ces modèles prédictifs peuvent être de différentes natures. Il peut par exemple s'agir d'arbres décisionnels, de forêts aléatoires, de réseaux de neurones, notamment de réseaux neurones multicouches (« *multilayer neural network* » en anglais), etc.

Ces modèles prédictifs nécessitent un apprentissage afin de déterminer leurs différents paramètres. Le mécanisme d'apprentissage sera expliqué plus loin.

Chaque modèle prédictif est entraîné de sorte à pouvoir générer correctement un indicateur de faute, ou résidu, $r_1$, $r_2$, $r_3$, ..., $r_N$.

À partir de ces indicateurs de faute, des moyens 23 sont prévus pour déterminer un diagnostic D.

Pour ce faire une matrice de signatures 24 peut être utilisée.

Une matrice de signatures est une structure de données qui associe des indicateurs de faute à un diagnostic. Ces associations sont dépendantes du choix de construction des indicateurs de faute effectué afin que ceux-ci puissent d'une part permettre la détermination des différents dysfonctionnements envisageables et d'autre part permettre leur isolation, c'est-à-dire de pouvoir déterminer un unique diagnostic à partir d'un ensemble donné d'indicateurs de faute.

Ainsi, chaque diagnostic prévu est associé à une signature qui l'identifie de façon unique et est constitué d'un ensemble de valeurs des différents indicateurs de fautes. Ces valeurs peuvent être binaires ou alors seuillées pour le devenir et signifier alors présence ou absence d'une faute pour l'indicateur en question.

La matrice de signatures 24 n'est bien évidemment pas nécessairement structurée de façon matricielle dans sa mise en oeuvre. Toutefois, fonctionnellement, et pour faciliter la compréhension, elle est habituellement présentée sous une telle forme.

Un exemple d'une telle matrice de signatures peut être comme suit :

|       | $r_1$ | $r_2$ | $r_3$ | ... | $r_N$ |
|-------|-------|-------|-------|-----|-------|
| $D_1$ |       | X     | X     |     |       |
| $D_2$ |       |       | X     |     | X     |
| ...   |       |       |       |     |       |
| $D_p$ | X     | X     |       |     |       |

$D_1$, $D_2$...$D_p$ correspondent au p diagnostics de dysfonctionnement prévus. Ces diagnostics correspondent aux dysfonctionnements du système physique 1 dont on cherche à déterminer la survenance.

Dans l'exemple, les « X » correspondent à des valeurs non nulles, c'est-à-dire que le résidu correspondant affecte le diagnostic en question.

Dès lors, à l'aide d'une telle matrice et connaissant les résidus, on peut directement déduire le diagnostic $D_1$, $D_2$... $D_p$ correspondant.

Par exemple, si les résidus $r_2$ et $r_3$ ne sont pas nuls et que les autres résidus le sont, alors le diagnostic $D_1$ peut être déterminé. De même, si les résidus $r_1$ et $r_2$ ne sont pas nuls et que les autres le sont, alors le diagnostic $D_p$ peut être déterminé.

Ainsi, le système de diagnostic 20 peut déterminer le diagnostic sur l'état du système physique 10 en fonction des mesures fournies par les capteurs observant ce système physique.

Cette détermination peut avoir lieu de façon continue, c'est-à-dire au fur et à mesure de la capture de nouvelles mesures par les capteurs.

Les modèles prédictifs étant computationnellement rapides, le diagnostic peut être établi au fil de l'eau. Il est ainsi possible de réagir rapidement. Il peut en effet être important de réagir rapidement à certains dysfonctionnements d'un système physique, certains dysfonctionnements pouvant engendrer des surcoûts (production de produits défectueux, risques physiques, phénomènes d'emballement, etc.)

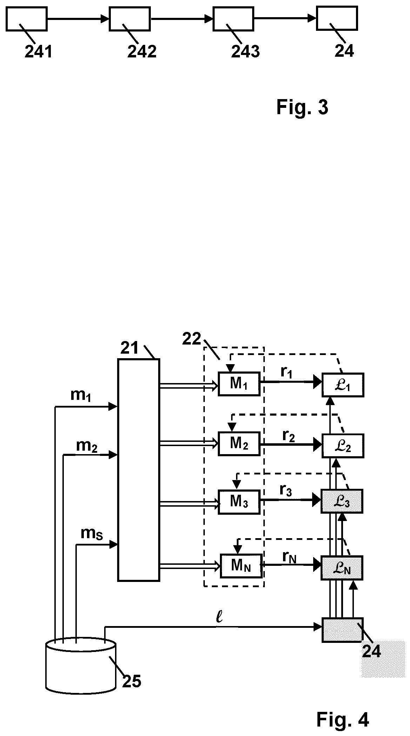

La FIGURE 3 illustre un mode de réalisation de la détermination préalable de cette matrice de signatures.

Dans un premier temps, dans une étape 241, un graphe est déterminé pour représenter les variables du système physique 10 et les relations entre ces variables. Chaque relation peut correspondre à une équation mathématique qui régit le fonctionnement de ce système et met en oeuvre ces variables.

Il n'est pas nécessaire de connaître précisément les équations (contrairement à ce qui doit être effectuée pour la génération de résidus au moyen des relations de redondance analytique), mais uniquement les relations entre les variables, c'est-à-dire de quelles variables dépend une équation.

Les variables regroupent les quantités observables (qui peuvent faire l'objet de mesures par un capteur) et les variables non observables (grandeurs physiques qui ont un sens dans le système physique mais ne sont pas mesurables).

Le graphe peut comprendre des noeuds correspondant aux variables (y compris les quantités mesurables) et des équations (ou relations), et des arêtes correspondant au fait qu'une variable intervienne dans une équation.

Selon un mode de réalisation, ce graphe peut être un graphe biparti. Un graphe biparti est composé d'un premier ensemble représentant les équations du système physique et un second ensemble représentant les variables. Un lien existe entre deux sommets, ou noeuds, de deux ensembles distincts si et seulement si la variable apparaît dans l'équation.

À partir d'un tel graphe, dans une étape 242, on peut déterminer des sous-graphes minimalement surdéterminés.

Un sous-graphe minimalement surdéterminé est un sous-graphe du graphe biparti qui contient exactement une équation de plus que de variables non observables.

Afin d'obtenir les sous-graphes minimalement surdéterminés, on peut par exemple utiliser une décomposition de Dulmage-Mendelsohn.

Cette décomposition est par exemple expliquée sur la page Wikipedia consacrée : https://en.wikipedia.org/wiki/Dulmage%E2%80%93Mendelsohn_decompos ition

Une décomposition de Dulmage-Mendelsohn permet d'obtenir, à partir d'un graphe biparti, trois sous-graphes : un sous-graphe sousdéterminé, un sous-graphe juste-déterminé et un sous-graphe minimalement surdéterminé.

Cette méthode a été élaborée dans M. Krysander et J. Aslund, « Graph theoretical methods for finding analytical redundancy relations in overdetermined differential algebraic systems » in IMACS World Congress, Paris, France, 2005, pour la génération des relations de redondance analytique.

Des raffinements et évolutions ont été proposés pour optimiser et réduire la complexité algorithmique de cette décomposition. On peut notamment citer M. Krysander, J. Aslund et M. Nyberg, « An efficient algorithm for finding minimal overconstrained subsystems for model-based diagnosis » in IEEE Transactions on Systems, Man, and Cybernetics, part A: Systems and Humans, 2008. Cette proposition part du graphe complet puis le réduit, progressivement, jusqu'à obtenir un modèle structurellement surdéterminé minimal MSO.

À chaque sous-graphe minimalement surdéterminé correspond une relation de redondance analytique, qui est vérifiée lorsque le système physique est en fonctionnement nominal.

Si un sous-graphe minimalement surdéterminé contient une équation qui n'est plus vraie lorsqu'une faute a lieu, c'est-à-dire que le sous-système que décrit ce sous-graphe contient un composant qui peut dévier de son comportement nominal, alors la relation de redondance analytique, RRA, de ce sous-graphe est un indicateur de cette faute. Une RRA peut impliquer plusieurs fautes. Dans le cas où le résidu (ou indicateur de faute) associé à cette relation de redondance analytique est non nul (ou substantiellement non nul), une faute associée à cette relation de redondance analytique, RRA, a eu lieu.

Chaque résidu est associé à une liste de dysfonctionnements qui peuvent avoir lieu dans le sous-système représenté par le sous-graphe lui correspondant.

Comme vu précédemment, dans une étape 243, on construit la matrice de signatures 24 en associant à chaque dysfonctionnement, la valeur de chaque résidu. Elle permet de dire quel résidu est censé être activé (c'est-à-dire non nul) lorsqu'un dysfonctionnement donné a lieu dans le système.

En reprenant l'exemple de la matrice de signatures 24 fourni précédemment, on peut considérer un sous-graphe qui décrit le comportement d'un sous-système qui peut générer des dysfonctionnements correspondant aux diagnostics $D_1$ et $D_P$. L'activation du résidu $r_2$ de ce sous-graphe témoigne de la présence d'au moins un de ces deux dysfonctionnements.

Afin de déterminer les N modèles prédictifs, $M_1$, $M_2$, $M_3$, ..., $M_N$, une phase d'entraînement, ou d'apprentissage, est nécessaire. Elle consiste à déterminer les paramètres internes de chaque modèle, individuellement, afin qu'il soit capable de prédire un identifiant de faute pertinent lorsqu'on lui soumet un ensemble de valeurs d'entrée (mesures issues des capteurs) dont on ne connaît *a priori* pas l'identifiant de faute associé. Les modèles correctement entraînés sont donc à même de généraliser la détermination des identifiants de faute à des situations nouvelles et inconnues.

La constitution d'un ensemble d'apprentissage (ou d'entraînement) consiste à regrouper des associations entre des mesures des capteurs et un identifiant de faute correspondant. Pour ce faire, on collecte l'ensemble des mesures du système physique pour chaque dysfonctionnement à diagnostiquer ainsi que pour le cas nominal.

La collecte peut se faire à l'aide des capteurs $1_1$, $1_2$, ..., $1_s$. Cette collecte peut être effectuée avant la construction du modèle structurel et la détermination du graphe (étape 241) afin de savoir quelle variable du système est observable et quelle variable ne l'est pas.

Lors de cette phase de collecte, on associe chaque ensemble à une étiquette correspondant au dysfonctionnement associé ou au cas nominal.

La FIGURE 4 illustre la phase d'entraînement (ou apprentissage).

La référence 25 représente l'ensemble d'apprentissage précédemment constitué. Celui-ci associe donc des ensembles de mesures $m_1$, $m_2$, ..., $m_s$ à une étiquette $\ell$ représentant un diagnostic (c'est-à-dire un dysfonctionnement ou le cas nominal).

Pour tout ou partie de cet ensemble d'apprentissage, on soumet les mesures aux moyens 21 prévus pour transmettre ces mesures $m_1$, $m_2$, ..., ms en entrée de l'ensemble 22 de modèles prédictifs.

Les modèles prédictifs fournissent alors un résidu, respectivement $r_1$, $r_2$, $r_3$,...,$r_N$.

L'étiquette $\ell$ associée aux mesures est utilisée pour déterminer des valeurs souhaitées des indicateurs de fautes, selon la matrice de signatures 24.

Les indicateurs de fautes fournis par les modèles prédictifs et les indicateurs de faute souhaités peuvent être comparés selon une fonction de coût (ou « *loss fonction* » en anglais),

$$\mathcal{L}_1, \mathcal{L}_2, \mathcal{L}_3, ... \mathcal{L}_N,$$

qui peut être la même pour chaque paire indicateur générée / indicateur souhaité.

Le résultat de ces comparaisons est utilisé pour modifier les paramètres internes des modèles prédictifs.

En itérant ce processus sur les différentes associations de l'ensemble d'apprentissage, 25, les modèles prédictifs convergent progressivement vers un état stable leur permettant de bonnes performances de généralisation pour pouvoir déterminer des indicateurs de faute.

Selon l'invention, il est donc mis en place un modèle prédictif par indicateur de faute, celui-ci étant entraîné indépendamment des autres modèles prédictifs (c'est-à-dire en fonction d'une sortie souhaitée propre).

Selon un mode de réalisation, plusieurs modèles prédictifs peuvent être prévus pour un même indicateur de faute.

L'entraînement de chaque modèle prédictif a alors lieu de la même façon que précédemment, la seule particularité étant que plusieurs modèles prédictifs peuvent avoir le même indicateur de faute souhaité.

Une étape de sélection d'un modèle prédictif parmi ceux correspondant à un même indicateur de faute peut être mise en place. Cette sélection est effectuée en fonction de critères définis comme le taux de prédiction et/ou le temps d'exécution, et/ou, l'espace mémoire, etc.

Le modèle prédictif sélectionné peut ensuite être utilisé pour la phase de production durant laquelle le système de diagnostic 20 est utilisé pour déterminer des diagnostics du système physique 10.

Bien entendu, la présente invention n'est pas limitée aux exemples et au mode de réalisation décrits et représentés, mais elle est susceptible de nombreuses variantes accessibles à l'homme de l'art.

**Revendications**

1. Procédé d'établissement d'un diagnostic (D) d'un système physique (10) comportant l'acquisition de mesures ($m_1$, $m_2$, ..., $m_S$) fournies par des capteurs ($1_1$, $1_2$, ..., $1_S$), la fourniture desdites mesures en entrée d'un ensemble (22) de modèles prédictifs ($M_1$, $M_2$, $M_3$, ..., $M_N$) générant chacun un indicateur de faute ($r_1$, $r_2$, $r_3$, ..., $r_N$), puis la détermination d'un diagnostic dudit système physique à partir desdits indicateurs de faute et d'une matrice de signatures (24) associant diagnostics et indicateurs de faute ($r_1$, $r_2$, $r_3$, ..., $r_N$).

2. Procédé selon la revendication précédente, dans lequel ladite matrice de signatures (24) est déterminée par la détermination (241) d'un graphe, la détermination (242) de sous-graphes minimalement surdéterminés à partir dudit graphe, puis la détermination (243) de ladite matrice de signatures (24) à partir de l'ensemble desdits sous-graphes minimalement surdéterminés.

3. Procédé selon la revendication précédente dans lequel la détermination (242) des sous-graphes minimalement surdéterminés est obtenue par une décomposition de Dulmage-Mendelsohn.

4. Procédé selon la revendication précédente, dans lequel lesdits modèles prédictifs ($M_1$, $M_2$, $M_3$, ..., $M_N$) sont entraînés par la constitution d'un ensemble d'apprentissage associant des ensembles de mesures et des étiquettes représentant un diagnostic souhaité, et par l'entraînement supervisé itératif de chacun desdits modèles prédictifs ($M_1$, $M_2$, $M_3$, ..., $M_N$) en fonction d'un indicateur de faute souhaité déterminé à partir de ladite étiquette et de ladite matrice de signatures (24).

5. Procédé selon la revendication précédente, dans lequel plusieurs modèles prédictifs ($M_1$, $M_2$, $M_3$, ..., $M_N$) sont entraînés pour un même indicateur de faute, et comportant une sélection d'un modèle prédictif ($M_1$, $M_2$, $M_3$, ..., $M_N$) parmi lesdits plusieurs modèles prédictifs ($M_1$, $M_2$, $M_3$, ..., $M_N$) en fonction de critères définis.

**6.** Système de diagnostic (20) pour un système physique (10) comportant des moyens pour l'acquisition de mesures ($m_1$, $m_2$, ..., $m_S$) fournies par des capteurs ($1_1$, $1_2$, ..., $1_S$), pour la fourniture desdites mesures en entrée d'un ensemble (22) de modèles prédictifs ($M_1$, $M_2$, $M_3$, ..., $M_N$) générant chacun un indicateur de faute ($r_1$, $r_2$, $r_3$, ..., $r_N$), puis pour la détermination d'un diagnostic dudit système physique à partir desdits indicateurs de faute et d'une matrice de signatures (24) associant diagnostics et indicateurs de faute ($r_1$, $r_2$, $r_3$, ..., $r_N$).

**7.** Système de supervision (2) comportant un système de diagnostic (20) selon la revendication précédente.

**8.** Système comportant un système de supervision (2) selon la revendication 7 et ledit système physique (10).

**9.** Programme d'ordinateur comprenant des instructions qui, lorsque le programme est exécuté par un ordinateur, conduisent celui-ci à mettre en oeuvre la méthode selon l'une des revendications 1 à 5.

**Fig. 1**

**Fig. 2**

241      242      243      24

**Fig. 3**

21    22

$m_1$

$m_2$

$m_S$

$M_1$   $r_1$   $\mathcal{L}_1$

$M_2$   $r_2$   $\mathcal{L}_2$

$M_3$   $r_3$   $\mathcal{L}_3$

$M_N$   $r_N$   $\mathcal{L}_N$

$\ell$

24

25

**Fig. 4**

Europäisches
Patentamt

European
Patent Office

Office européen
des brevets

## RAPPORT DE RECHERCHE EUROPEENNE

Numéro de la demande

**EP 23 30 5050**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DANIEL JUNG: "Residual Generation Using Physically-Based Grey-Box Recurrent Neural Networks For Engine Fault Diagnosis", ARXIV.ORG, CORNELL UNIVERSITY LIBRARY, 201 OLIN LIBRARY CORNELL UNIVERSITY ITHACA, NY 14853, 11 août 2020 (2020-08-11), XP081738199, * pages 1-10 * ----- | 1-9 | INV. G05B23/02 |
| A | COMBASTEL C ET AL: "Combining FDI and AI Approaches Within Causal-Model-Based Diagnosis", IEEE TRANSACTIONS ON SYSTEMS, MAN, AND CYBERNETICS, PART B CYBERNETICS, IEEE SERVICE CENTER, PISCATAWAY, NJ, US, vol. 34, no. 5, 1 octobre 2004 (2004-10-01), pages 2207-2221, XP011118850, ISSN: 1083-4419, DOI: 10.1109/TSMCB.2004.833335 * page 2211; tableau 1 * ----- | 1,6,9 | |
| | | | DOMAINES TECHNIQUES RECHERCHES (IPC) |
| A | BREGON ANIBAL ET AL: "A Common Framework for Compilation Techniques Applied to Diagnosis of Linear Dynamic Systems", IEEE TRANSACTIONS ON SYSTEMS, MAN, AND CYBERNETICS: SYSTEMS, IEEE, PISCATAWAY, NJ, USA, vol. 44, no. 7, 1 juillet 2014 (2014-07-01), pages 863-876, XP011550887, ISSN: 2168-2216, DOI: 10.1109/TSMC.2013.2284577 [extrait le 2014-06-12] * page 872; tableau XIV * ----- | 1,6,9 | G05B |
| | -/-- | | |

Le présent rapport a été établi pour toutes les revendications

| Lieu de la recherche | Date d'achèvement de la recherche | Examinateur |
|---|---|---|
| Munich | 31 mai 2023 | Kuntz, Jean-Marc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

        ......................................................................

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

**Numéro de la demande**

**EP 23 30 5050**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SAPOUNTZOGLOU NIKOLAOS ET AL: "A Grid Connected PV System Fault Diagnosis Method", 2019 IEEE INTERNATIONAL CONFERENCE ON INDUSTRIAL TECHNOLOGY (ICIT), IEEE, 13 février 2019 (2019-02-13), pages 977-982, XP033573316, DOI: 10.1109/ICIT.2019.8755166 [extrait le 2019-07-02] * page 981; tableau IV * | 1,6,9 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 31 mai 2023 | Kuntz, Jean-Marc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.E. POTTER ; M.C. SUMAN.** Thresholdless redundancy management with array of skewed instruments. *Electronic Flight Control Systems,* 1977, vol. 224, 15-25
- **M. KRYSANDER ; J. ASLUND.** Graph theoretical methods for finding analytical redundancy relations in overdetermined differential algebraic systems. *IMACS World Congress, Paris, France,* 2005
- **M. KRYSANDER ; J. ASLUND ; M. NYBERG.** An efficient algorithm for finding minimal overconstrained subsystems for model-based diagnosis. *IEEE Transactions on Systems, Man, and Cybernetics, part A: Systems and Humans,* 2008